# FASCICULE DE BREVET EUROPEEN

(11) **EP 1 810 266 B1**
(45) Date de publication et mention de la délivrance du brevet: **25.07.2012**
(21) Numéro de dépôt: 05815185.3
(22) Date de dépôt: 27.10.2005
(51) Int. Cl.: G09F 3/00, G09F 3/03, G06K 19/073

(54) **PROCEDE ET DISPOSITIF DE VERIFICATION DE NON INTRUSION DANS UN SYSTEME ET / OU DE NON ATTEINTE A L'INTEGRITE D'UN OBJET OU DE SON CONTENU**
VERFAHREN UND VORRICHTUNG ZUR BELEGUNG DER NICHTEINDRINGUNG IN EIN SYSTEM UND/ODER DER NICHTVERLETZUNG DER INTEGRITÄT EINES OBJEKTS ODER VON DESSEN INHALTEN
METHOD AND DEVICE FOR VERIFICATION OF NON INTRUSION INTO A SYSTEM AND/OR NON-VIOLATION OF THE INTEGRITY OF AN OBJECT OR THE CONTENTS THEREOF

(30) Priorité: 04.11.2004 FR 0411734
(43) Date de publication de la demande: 25.07.2007
(73) Titulaire: Novatec SA, 82000 Montauban (FR)
(72) Inventeur: BOURRIERES, Francis, F-82000 Montauban (FR); KAISER, Clément, F-82000 Montauban (FR); BOURRIERES, Franck, F-82000 Montauban (FR)
(86) Numéro de dépôt international: PCT/FR2005/002706
(87) Numéro de publication internationale: WO 2006/048542

(56) Documents cités:
- EP-A- 1 087 334
- WO-A-01/11591
- WO-A-01/57831
- FR-A- 2 848 698

## Description

### CHAMP D'APPLICATION DE L'INVENTION :

La présente invention vise à proposer un procédé et un dispositif de très haute sécurité pour prévenir toute atteinte à l'intégrité d'un lieu, d'un objet ou d'un système et par conséquent à vérifier qu'il n' y a pas eu tentative d'intrusion ou intrusion effective dans un lieu ou un système protégé ou modification de l'identité d'un objet dont il faut préserver l'intégrité ou qu'il n'y a pas eu tentative d'ouverture ou ouverture effective d'un système par une personne non autorisée ou substitution d'un objet par une copie ou duplication d'un objet original.

### ETAT DE L'ART :

Un très grand nombre de procédés existent pour vérifier l'intrusion ou la tentative d'intrusion dans un système ou un lieu à protéger par des personnes non autorisées et pour identifier et authentifier des objets comme étant des originaux. Les moyens modernes les plus communs sont :
- des alarmes électroniques, ces systèmes déclenchent une alarme quand il y a intrusion par quiconque qui ne stoppe pas préalablement l'alarme à l'aide d'un code secret par exemple ou d'une empreinte biométrique autorisée.
- les systèmes de vidéosurveillance permettent d'enregistrer ou de contrôler en temps réel les lieux de passage ou d'accès,
- Les cartes (à puce, magnétique, ...), les codes secrets ou la biométrie, permettent de contrôler l'accès au lieu ou au système protégé.

Tous ces moyens sont adaptés aux contrôles d'accès et aux allers et venus d'êtres humains dans des lieux privés ou publics. En ce qui concerne la sécurisation des accès à des systèmes ou même l'interdiction générale d'accès dans un lieu ou dans un système sauf par une autorité assermentée, il est généralement fait usage de scellés dit de sécurité, permettant de condamner et d'interdire l'ouverture du système ou du lieu à protéger. Des scellés sont aussi utilisés pour garantir l'intégrité ou l'authenticité d'un objet. Ces scellés peuvent prendre différentes formes en fonction de l'application. La vérification de l'intégrité physique du scellé permet en principe d'assurer qu'il n'y a pas eu violation du système ou de l'objet. L'appellation système est prise au sens large, ce peut être par exemple un ensemble d'éléments associés entre eux ou un emballage ou un conditionnement quelconque tel qu'une bouteille avec par exemple la nécessité de préserver l'intégrité du contenu, de même il peut s'agir d'un système d'informations traitant des données sensibles. La présente invention vise plus particulièrement ces domaines d'application comme cela sera vu ci-après.

Le scellé le plus ancien est le cachet de cire, généralement marqué du sceau de l'Autorité. Il existe aussi des scellés métalliques ou en matière plastique intégrant un identificateur se présentant sous la forme de collier à serrage progressif. Ces scellés ne sont pas réutilisables car leur destruction est irrémédiable lorsqu'il y a violation du lieu ou du système à protéger. Il existe aussi les scellés métalliques sous forme de fil cannelé dit « perlé » et dont les deux extrémités sont serties dans un morceau de métal mou, généralement du plomb à l'aide d'une pince spéciale qui marque d'un sceau en relief ledit morceau de plomb, ceci est d'ailleurs généralement appelé un plombage. Ce dernier type de scellé est souvent utilisé sur des compteurs d'eau, de gaz, d'électricité, afin d'interdire l'accès au dispositif de comptage que celui-ci soit mécanique ou électronique. De même dans la grande famille des scellés nous pouvons ranger les plaques ou supports d'identification de toutes natures qui sont très souvent des plaques métalliques ou plastiques gravées ou frappées ou imprimées. Ces plaques ou supports identifient en général un objet, un système complexe ou une machine ou un individu au travers d'une carte d'identité, ce support étant marqué du sceau de l'Autorité qui l'a délivré et qui permet de l'authentifier. Les applications mettant en oeuvre des plaques ou supports d'identification sont nombreuses et variées, parmi les plus fréquentes on peut trouver : les véhicules automobiles qui possèdent à la fois la plaque d'identification du constructeur et les plaques d'immatriculation du ressort de l'administration ; les plaques d'identification et d'homologation de machines outils ; les plaques de matériels et de machines électriques et électroniques, etc....En général ces plaques d'identification sont répertoriées dans des fichiers ou des bases de données constructeur ou de l'administration.

Tous ces types de scellés ou supports d'identification présentent deux inconvénients majeurs : le premier c'est qu'ils sont très facilement reproductibles à l'identique avec des moyens sommaires y compris l'élément authentificateur ou sceau, il est d'ailleurs possible de se les procurer en grande quantité sur le marché ; le deuxième, c'est la substitution d'un objet ou d'un système à protéger. Pour certains d'entre eux, la liaison entre le scellé ou le support et les parties dont il faut interdire la séparation ou l'ouverture est inefficace et peut être facilement détruite en conservant intact le scellé ou le support. Il s'agit par exemple d'une fixation par collage qui pourra être dissoute par un produit chimique ou solvant approprié et qui va permettre de récupérer le scellé, d'accéder à la zone interdite et de repositionner le scellé au même endroit que précédemment et ainsi d'avoir accédé ou modifié des données sans que quiconque ne s'en aperçoive. Il devient aussi possible de substituer un scellé d'un produit original à une copie et ainsi de faire passer une copie pour un original.

De même, pour interdire l'accès physique à des systèmes électroniques contenant des données confidentielles, il devient fréquent d'utiliser des hologrammes très spécifiques et même pour certains hautement sécurisés. Or, le qualificatif de hautement sécurisé était certainement plus approprié dans le passé qu'il ne l'est à l'heure actuelle car des moyens existent pour les reproduire à l'identique très facilement avec un niveau de qualité comparable à l'original. De plus les hologrammes ne sont pas individualisés, c'est-à-dire qu'ils sont tous identiques entre eux pour une même série et de ce fait, il devient facile pour une personne non autorisée de se procurer ces hologrammes, d'ouvrir le boîtier à protéger en détruisant l'hologramme et de le remplacer par un nouveau en touts points identique. Dans le cas où il n'est pas possible de se procurer l'hologramme, le contrefacteur peut toujours le décoller du boîtier sans le détruire et le remettre en place de la même façon. Ainsi d'une façon ou d'une autre, il devient extrêmement facile pour une personne déterminée de violer un système et d'accéder physiquement à des données confidentielles, par exemple dans un boîtier électronique contenant des mémoires de stockage ou de substituer un objet à un autre. De façon générale et quelle que soit la méthode utilisée, le scellé de sécurité doit d'une part empêcher la compromission d'accès physique du contenant vers le contenu et d'autre part de révéler cette compromission lorsque malgré tout celle-ci s'est produite. Un scellé de sécurité n'a pas vocation à rendre impossible les attaques contre un système ou l'accès à un lieu ou container quelconque, par contre s'il est bien conçu et bien intégré sur le produit ou le lieu à protéger, il dissuadera l'attaquant désireux de ne pas laisser de trace. Il s'agit avant tout d'un moyen de défense, lequel moyen est capable de mettre en évidence une tentative d'atteinte à l'intégrité physique du système ou de l'objet sur lequel il est monté. Selon les applications, le scellé dit de sécurité peut prendre plusieurs formes. Un scellé est en fait un moyen physique de réaliser une union authentifiable entre lui-même et un ou plusieurs éléments par une Autorité qui marquera le scellé de son sceau (sceau d'Etat par exemple).

A titre d'exemples :
- un bouchon en plastique ou métal sur les bouteilles d'eau minérale de soda ou d'alcool dont la première ouverture entraîne un sectionnement de la partie base du bouchon liée à la bouteille. Cette partie constitue un scellé entre le bouchon et la bouteille et permet la vérification par le consommateur que la bouteille n'a pas été ouverte.
- les capsules de surbouchage plastique ou métal dont la destruction totale ou partielle est obligatoire pour ouvrir la bouteille,
- les étiquettes « destructibles » permettant de lier deux éléments entre eux, ces étiquettes sont souvent utilisées pour prouver l'ouverture d'équipement électronique,
- des étiquettes destructibles prouvant l'ouverture d'un emballage, d'une enveloppe, ...
- de même, une carte nationale d'identité doit constituer un scellé entre le citoyen qui la possède et l'Etat qui la lui a délivré,
- une carte bancaire doit constituer un scellé entre le client qui la possède, dont il connaît le code enregistré dans la mémoire et la banque qui donne un droit à paiement ou à retirer de l'argent.
- une carte santé doit constituer un scellé entre le patient qui la possède, l'organisme de santé qui l'a nominativement attribuée avec des droits qui lui sont associés.

Dans toutes ces applications, la problématique est précisément la possibilité de reproduire ces scellés ou ces documents officiels à l'identique, avec pour conséquence la possibilité d'accéder frauduleusement au contenu physique de l'emballage ou à des droits non autorisés pour les détenteurs de faux documents. En effet, les éléments d'authentification de tels documents sont soit des impressions complexes, soit les hologrammes, soit les filigranes ou encre invisible, mais toutes ces techniques sont issues de procédés industriels courants et bien maîtrisés donc facilement contrefaits. En ce qui concerne les puces électroniques embarquées même sous leurs formes les plus sécurisées comprenant un cryptoprocesseur, ces dernières n'assurent le lien qu'entre la personne et l'organisme ou l'Autorité émettrice mais ne prouve pas l'authenticité du support, ni le contenu de la mémoire car tout ceci n'est que de la logique qui est tôt ou tard accessible par des contrefacteurs grâce aux puissance de calcul et qui pourront découvrir les secrets partagés et ainsi produire de « vraies fausses » cartes d'identité, de santé, bancaires, ...

Le brevet FR2848698 du même demandeur et inventeur, concerne un procédé d'identification et d'authentification sans lecteur spécifique d'un objet ou d'un être vivant. Dans ce document, il est préconisé de rattacher un identificateur difficile ou impossible à reproduire à l'objet ou à l'être vivant à identifier ou à authentifier. Comme on peut le constater, ce document ne fait pas référence à un système de vérification de non intrusion dans un système ou un lieu à protéger ou de non atteinte à l'intégrité d'un objet ce qui est précisément l'objet de la présente invention. Le procédé décrit dans le document FR2848698 ne permet en aucun cas de garantir la non ouverture d'un système ou d'un lieu à protéger. En effet, le fait d'apposer un identificateur sur un objet n'empêche en rien d'avoir accès à l'objet, de le modifier, de l'analyser, ... sans que cela soit visible. Dans le pire des cas, il est même envisageable de prélever l'authentificateur sans le détruire d'un objet et de l'apposer sur un autre objet.

Le document WO 01/11591 décrit un dispositif qui permet d'identifier des objets. Cet identificateur présente la particularité de comporter une matrice de lentilles qui génère un effet d'optique en trois dimensions, ce qui ne veut pas dire qu'il n'est pas reproductible. Ce qui est divulgué dans ce document diffère totalement de la présente invention essentiellement en ce que :
- à l'instar du brevet FR2848698, cet identificateur ne permet pas de garantir la mise en évidence de l'ouverture ou de l'intrusion de l'objet ou du lieu à protéger.
- l'identificateur décrit dans ce document est reproductible à l'infini puisqu'il repose sur un procédé de fabrication certes complexe mais tout à fait maîtrisé. Par conséquent l'unicité de cet identificateur n'est pas assurée.
- l'identificateur n'est pas associé à une base de données.

Le document EP1087334 décrit un système de scellé faisant appel à un transpondeur qui permet de contenir une identification électronique et interrogeable à distance. Ce type de transpondeur n'a rien d'unique puisqu'il est tout à fait possible pour une personne ou une organisation disposant de moyens de production d'en produire plusieurs ayant le même numéro. Par conséquent, il est tout à fait possible d'ouvrir le dispositif décrit d'accéder à son contenu et de reconstituer un ensemble de deux capsules identiques aux premières réponses avec un transpondeur donnant la même réponse que le premier. En fait, la faille de ce type de dispositif est dans toute la chaîne de fourniture des capsules et des transpondeurs, si une personne ou une organisation mal intentionnée peut détourner des pièces, elle sera en mesure de reconstituer le scellé identique au premier. Dans la présente invention comme cela sera vu ci-après, le procédé de non intrusion repose sur un authentificateur unique et non reproductible à l'identique et enregistré dans une base de données, par conséquent, même si une personne parvient à subtiliser des authentificateurs, ces derniers n'auront aucune utilité car ils ne seront pas enregistrés dans la base de données.

### DESCRIPTION DE L'INVENTION :

L'invention vise à apporter une solution globale aux deux problèmes qui se posent dans l'utilisation des scellés et des plaques ou supports d'identification à savoir : rendre les scellés ou les supports non interchangeables entre eux et rendre physiquement solidaire le scellé du système ou du lieu ou de l'objet à protéger de façon à ce que s'il y a une intrusion ou simplement une tentative d'intrusion ou substitution, soit le scellé, soit le lien qui le lie au système, soit les deux sont irrémédiablement détruits ou marqués de façon visible par un contrôleur. A ce titre le procédé selon l'invention joue un rôle de prévention car il permet de vérifier la non intrusion dans un système ou un lieu à protéger de façon certaine et ainsi de prévenir tout acte de malveillance.

Selon une première caractéristique particulièrement innovante et inventive, il est fait usage d'un authentificateur physique unique et non reproductible à l'identique afin de garantir sa non interchangeabilité et dont une représentation est stockée dans une base de données locale ou distante. Pour garantir la non reproductibilité de l'authentificateur physique il est utilisé un identificateur volumique résultat d'un processus chaotique et impossible à contrôler par l'homme. A titre d'exemple ce processus chaotique peut être la formation de bulles lors du durcissement de la matière constituant ledit authentificateur. Ainsi, à l'inverse des dispositifs de l'art antérieur qui sont le résultat d'un processus de fabrication parfaitement maîtrisé par l'homme et donc reproductible par un autre homme disposant d'outils similaires, chaque authentificateur utilisé dans la présente invention est unique et impossible à reproduire par l'homme car il est le résultat d'un processus incontrôlé par ce dernier. Cette caractéristique permet de s'affranchir de façon définitive de l'impossibilité par quiconque de se procurer des authentificateurs ou des scellés identiques aux originaux. De cette façon, le seul moyen restant pour accéder à l'intérieur du système ou du lieu à protéger est d'essayer de récupérer sans le détruire ledit authentificateur original. Afin de résoudre ce second problème et selon une caractéristique complémentaire l'authentificateur est associé par un lien physique au système ou au lieu à protéger ou à l'objet de façon à ce que toute tentative d'ouverture du système ou du lieu à protéger modifie de façon visuelle ou détruise l'authentificateur physique unique et non reproductible original en le rendant inutilisable et/ou modifie de façon visible ou détruise le lien associant ledit authentificateur physique au système ou au lieu à protéger ou à l'objet et que la vérification de l'intégrité de l'authentificateur physique et de sa correspondance avec sa représentation stockée dans la base de données garantisse le fait qu'il n'y a pas eu d'intrusion dans le système ou le lieu à protéger ou de substitution à l'objet. De façon pratique plusieurs solutions existent aussi bien en ce qui concerne le choix d'un authentificateur infalsifiable que dans le choix d'un lien physique au système à protéger, cette association étant mise en oeuvre dans le cadre de la présente invention.

Selon une autre caractéristique, à titre d'authentificateur physique unique et non reproductible à l'identique c'est-à-dire impossible ou extrêmement difficile à cloner, il peut être utilisé un matériau transparent présentant des hétérogénéités dispersées de façon aléatoire dans le volume. Ces hétérogénéités pouvant être distinguées visuellement sont capturées par exemple sous forme de photographie et une ou plusieurs représentations caractérisant cette forme d'identificateur sont stockées dans une mémoire ou une base de données soit sous forme d'image à deux dimensions, soit sous forme numérique calculée à partir d'éléments remarquables, de positionnement, de dimension, etc. des hétérogénéités noyées dans le volume, les deux formes de représentation image et numérique pouvant cohabiter. De même il est possible d'intégrer à cette forme d'identification des particules magnétiques permettant de codifier d'une autre façon.

Selon une autre caractéristique et un mode préféré, il est utilisé un authentificateur transparent volumique en verre, céramique, plastique ou polymère contenant des bulles visibles dont le nombre, la forme et la disposition sont issues d'une autogénération chaotique non contrôlable par l'homme. Ce type d'authentificateur est particulièrement intéressant car il est toujours unique et non clonable par l'homme. Le brevet PCT FR/01/00322 du même déposant et des mêmes inventeurs suggère ce type d'authentificateur à bulles avec un système de lecture approprié. Dans le cas de la présente invention il s'agit d'utiliser cet authentificateur à bulles dans un procédé particulier dont la finalité ou le but est de bloquer ou d'interdire des accès à des systèmes ou à des lieux ou de vérifier l'intégrité ou l'identité avec des renseignements associés d'un objet original. De la même façon que précédemment, une représentation sous forme d'image et/ou numérique est stockée dans une base de données de façon à pouvoir vérifier l'intégrité dudit authentificateur original. Un autre type d'authentificateur peut être constitué à partir du lien physique ou de l'objet à protéger proprement dit en répertoriant une surface de la matière constituant une originalité et en codifiant ou en cryptant celle-ci grâce à un algorithme. Cette signature est stockée de la même façon dans une base de données locale ou distante ou bien peu être imprimée à côté de cette partie authentificatrice. A tous ces types d'authentificateurs infalsifiables cités, il peut en être rajoutés certainement d'autres sans sortir du cadre de la présente invention. Dans tous les cas, il est nécessaire de stocker dans une base de données ou mémoire une représentation des éléments caractéristiques de l'authentificateur choisi ou d'imprimer localement une signature propre à l'authentificateur et selon un algorithme choisi.

Selon une autre caractéristique, la mémoire et/ou la base de données dans laquelle est stockée une représentation de l'authentificateur, est située physiquement dans le système ou/et le lieu à protéger ou/et sur le support lui-même mais dont le contenu peut être lu de l'extérieur par une personne autorisée. Cette représentation de l'authentificateur constitue une clef d'accès au système physique et/ou d'informations logiques.

Selon une autre caractéristique la représentation de l'authentificateur sous forme d'image et/ou représentation numérique est consultable par un réseau de télécommunication type Internet.

Selon une autre caractéristique, le contenu stocké sous forme numérique et/ou d'image peut être consulté par un contrôleur ou agent autorisé de plusieurs façons. Une première façon consiste à comparer visuellement la représentation sous forme d'image stockée dans la base de données locale et/ou distante avec l'authentificateur physique en analysant la similitude de positionnement des bulles ou des hétérogénéités. Plusieurs méthodes existent pour visualiser l'image : soit directement sur un écran intégré au système ou lieu à protéger, soit sur un écran dissocié ou annexe (téléphone mobile avec accès Internet), soit imprimé sur papier à partir d'une imprimante intégrée ou bien à partir d'une imprimante dissociée du système ou du lieu à protéger. Dans le cas où la base de données n'est pas locale mais distante, un code d'appel constituant l'identifiant de l'authentificateur dans la base de données distante est utilisé, le code d'appel peut être numérique, alphanumérique, code à barres, piste magnétique, puce électronique, etc.

Il est évident que la base de données locale ou distante est sécurisée ou protégée contre toute tentatives de modification ou de remplacement par une autre information.

Selon une autre caractéristique le procédé de vérification de non intrusion dans un système ou un lieu à protéger ou de non atteinte à l'intégrité d'un objet selon l'invention est effectué par comparaison automatique de l'authentificateur, à l'aide d'un lecteur approprié, avec sa représentation numérique stockée dans une base de données locale ou distante

Selon une autre caractéristique du procédé selon l'invention, l'authentificateur infalsifiable car unique et non clonable est associé par un lien physique au système ou au lieu à protéger de façon à ce que toute tentative d'ouverture modifie de façon visuelle ou détruise ledit authentificateur en le rendant inutilisable et/ou modifie de façon visible ou détruise le lien associant l'authentificateur au système ou au lieu à protéger.

Selon l'invention, ce lien physique est un élément extrêmement important car l'authentificateur devenant inattaquable de par ses caractéristiques intrinsèques de non reproductibilité, les faussaires essayeront de s'attaquer à ce lien, par conséquent et selon une caractéristique du procédé, le lien physique associant l'authentificateur physique au système ou au lieu ou à l'objet à protéger et à identifier de façon certaine est un fil s'intégrant de façon définitive et irréversible à la fois à l'authentificateur et à l'élément à protéger.

Selon une caractéristique ce lien physique est en partie intégré dans l'authentificateur à bulles lors de la fabrication de celui-ci. Selon une variante préférée et particulièrement inventive, un fil métallique ou non est noyé à l'un de ses bouts dans un polymère ou matériau transparent pris en sandwich entre deux feuilles dont une au moins est transparente. Lors de sa solidification, ce polymère ou matériau transparent a une capacité à générer des bulles qui occupent une position chaotique, ces bulles ont des formes et dimensions diverses et sont en nombre aléatoire. Les feuilles sandwich et le matériau formant les bulles sont choisis et traités en surface de façon à ce que après solidification ils forment un complexe indissociable sauf à provoquer la rupture dudit complexe ce qui rend dans ce cas l'identificateur inexploitable. Le fil inséré à l'un de ses bouts de façon définitive à l'intérieur du complexe est ensuite inséré par le deuxième bout resté libre dans des trous aménagés entre par exemple une porte et son cadre ou un couvercle et son châssis, etc., dont il faut interdire l'ouverture. Le deuxième bout est ensuite pris en sandwich entre deux parties des feuilles emprisonnant la matière à bulles, sachant que ces parties sont adjacentes au matériau contenant les bulles mais dans le prolongement et avec les mêmes feuilles. Ces deux feuilles et le deuxième bout du fil placé à l'intérieur sont ensuite assemblés de façon définitive par tout moyen approprié. A titre d'exemple, une soudure par ultrasons sur des feuilles en polyester donne d'excellents résultats. Ainsi l'assemblage des deux bouts de fil, le premier prisonnier du matériau à bulles, le deuxième pris en sandwich et soudés par ultrasons entre les deux feuilles rend le lien irrémédiablement associé à l'authentificateur et au système à protéger. Toute tentative d'intrusion modifiera ou brisera soit le lien lui-même, soit l'authentificateur, ce qui permet de prouver que la violation ou la tentative de violation d'ouverture de système a été effective. Selon une autre variante, les deux bouts peuvent être soudés par ultrasons. Cette forme de scellé peut aussi convenir pour être fixé sur tout objet dont il faut préserver l'intégrité en tant qu'original.

Selon une autre caractéristique du procédé, le lien physique associant l'authentificateur physique au système ou au lieu ou à l'objet à protéger est un polymère transparent réunissant de façon définitive et irréversible l'authentificateur et l'élément à protéger. A titre d'exemple une forme de réalisation de l'invention consiste à relier par un système mécanique le couvercle ou la porte au châssis ou au lieu dont il faut interdire l'ouverture ou bien de placer une plaque d'identification sur l'objet et ensuite de masquer le système mécanique par un identificateur du type à bulles, le tout étant intégré dans un polymère transparent de type résine polyester ou silicone formant un verrou bloquant d'une part l'accessibilité au système mécanique et/ou d'autre part interdise la récupération du code à bulles. De façon générale l'invention vise à protéger l'intégrité d'un système, d'un objet ou d'un lieu en dissuadant de toute tentative de violation car si celle-ci est toujours possible, le faussaire ou le contrefacteur sait qu'elle sera obligatoirement détectée

Indépendamment de leurs mise en oeuvre, l'authentificateur physique volumique et le lien physique pris ensemble constituent un dispositif ou scellé d'authentification de très haute sécurité destiné à prouver la non violation d'un système ou d'un lieu et/ou l'identité d'un objet illustrant ainsi parfaitement le principe de défense dans la profondeur. Ainsi, selon une autre caractéristique de l'invention ce scellé d'authentification se caractérise en ce qu'il est constitué d'un authentificateur volumique physique unique et non reproductible dont une représentation est stockée dans une base de données et d'un lien physique intégré au dit authentificateur qui permet de l'associer au système à protéger ou à identifier et qu'une intrusion dans le système ou le lieu à protéger ou sur le scellé lui-même destiné à prouver l'identité d'un objet altère ledit scellé d'authentification de façon irréversible.

Comme cela a été évoqué dans les problématiques de preuve d'authenticité de documents officiels constituant intrinsèquement un scellé entre le client ou le citoyen ou le patient possesseur du document et l'organisme d'émission dudit document, la présente innovation apporte une réponse appropriée en matière de preuves irréfutables. Dans de telles applications comme les cartes nationales d'identité, les passeports, les cartes de santé, les cartes bancaires, etc. il faut apporter les preuves d'une part de l'authenticité du document émis par l'autorité et d'autre part de l'affectation de ce document unique à une personne bien identifiée et pas à une autre. Un authentificateur à bulles tel que décrit précédemment laminé intérieurement dans le corps de carte lors de sa fabrication permet de rendre celle-ci toujours unique et totalement non reproductible. Un tel authentificateur à bulles qui est un chaos tridimensionnel d'absence de matière dans la matière constitue une clef publique physique car accessible et visible par tout le monde de la même façon. La lecture d'une telle clef publique physique peut s'effectuer d'une infinité de façon constituant autant de clefs logiques privées en fonction des algorithmes choisis. Dans ces conditions, cette clef publique physique constitue un générateur de clefs logiques privées. Cette clef physique publique est intégrée à un document officiel et répertoriée dans la mémoire ou cryptomémoire embarquée et/ou dans la base de données de l'organisme émetteur. Cet authentificateur physique devenu une clef mais qui n'est accessible qu'en lecture et jamais en écriture, va remplir simultanément plusieurs fonctions, à savoir :
- il permet l'authentification à la fois visuelle et électronique de chaque support physique garantissant et prouvant l'existence légale et individuelle de chacun des documents émis par l'autorité,
- il permet de vérifier et prouver l'affectation du document possédé au seul titulaire de droits,
- utilisé comme générateur de clefs logiques, il permet de garantir l'intégrité au contenu de la mémoire embarquée.

Selon une autre caractéristique, un RFID (étiquette électronique radiofréquence) peut être associé et intégré physiquement à l'authentificateur à bulles selon la présente invention pour former un scellé de haute sécurité. Dans ce cas, le RFID n'aura qu'une fonction d'identification et de vérification de cohérence entre une signature logique extraite du code à bulles et celle stockée dans la mémoire RFID. Cette application peut s'avérer très intéressante pour sécuriser toute une chaîne de traçabilité en procédant par prélèvement pour authentifier quelques objets parmi des lots d'objets identiques. De façon concrète toute ou partie de l'antenne du RFID ou la puce silicium peut être noyée dans le matériau constituant l'authentificateur à bulles lors de sa fabrication.

D'autres caractéristiques sont mises en évidence ci-après par l'explication des différentes figures.

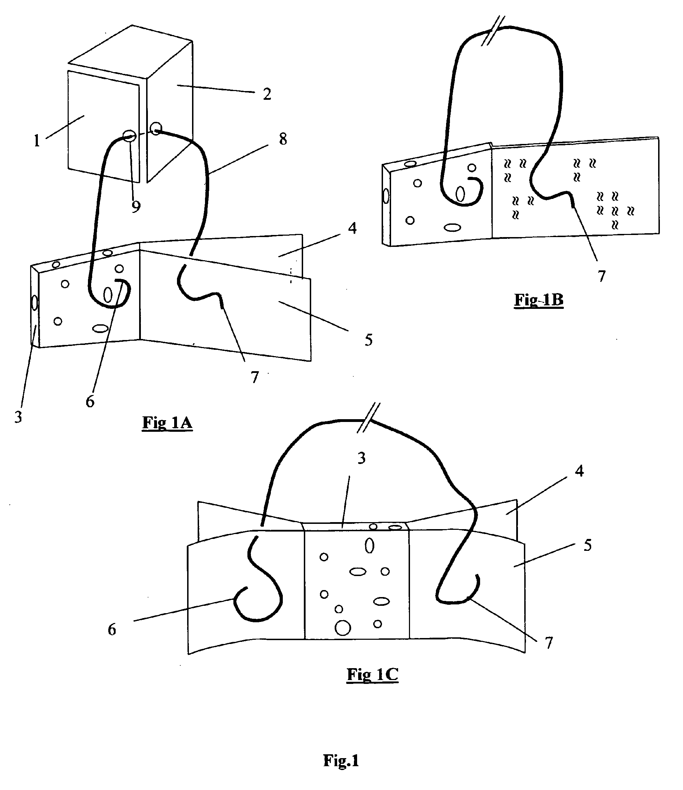

En figure 1 est représenté un couvercle (1) dont il faut interdire l'ouverture du châssis (2) ou pouvoir dire s'il y a eu ouverture ou tentative d'ouverture. Un fil (8) est préalablement intégré par l'un de ses bouts (6) à l'authentificateur à bulles (3) lors de sa fabrication. Cet authentificateur à bulles (3) est pris en sandwich entre deux feuilles (4) et (5) dont au moins l'une des deux est transparente et l'autre est de préférence réfléchissante. Après passage du fil dans les ouvertures (9) du couvercle (1) et du châssis (2), l'autre bout du fil (7) est positionné entre les parties libres non occupées par l'identificateur à bulles tel que représenté en 1A. Par la suite et tel que représenté en 1B, le bout (7) est soudé entre les deux feuilles (4) et (5) par ultrasons ou collage ou thermo-soudure ou tout autre moyen approprié. Dans ces conditions, toute tentative d'intrusion par enlèvement du fil prisonnier entre les deux feuilles soudées provoquera soit la rupture du fil, soit la destruction de l'une ou des deux feuilles soudées avec impossibilité de réutiliser le même scellé car l'infraction est visible. S'il y a substitution par un autre scellé, celui-ci possédera obligatoirement un autre authentificateur forcément différent car ils sont tous uniques comme cela a déjà été expliqué. Ainsi lors d'un contrôle par une personne autorisée, celle-ci pourra vérifier s'il y a correspondance ou non avec la signature image ou la signature numérique stockée dans la base de données locale et/ou distante.

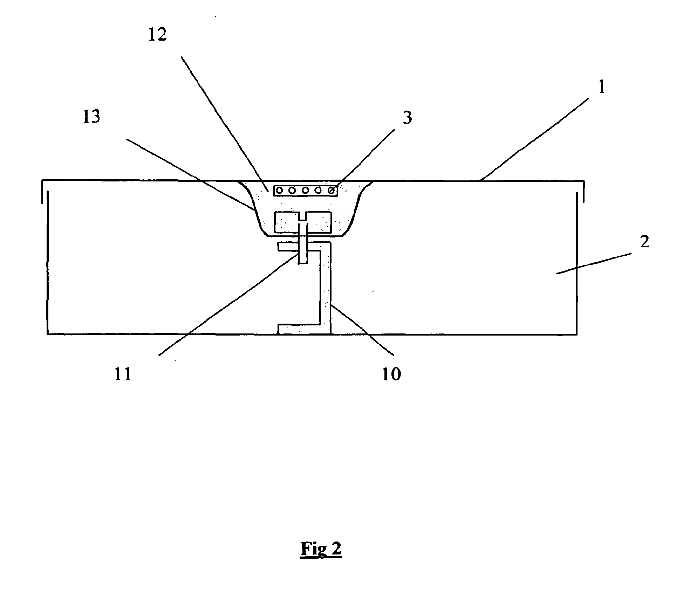

En figure 2 est représenté un couvercle (1) dont il faut interdire l'ouverture du châssis (2) ou pouvoir dire s'il y a eu ouverture ou tentative d'ouverture. Dans cet exemple le couvercle (1) est assemblé au châssis (2) par l'intermédiaire d'une vis (11) se vissant sur une patte (10) solidaire du châssis (2). Une résine transparente (12) est ensuite coulée dans le réservoir (13) intégré au couvercle (1), cette résine constitue le lien physique entre l'authentificateur et l'objet à protéger. Un identificateur volumique unique et non reproductible du type à bulles (3) est intégré dans la résine (12) transparente avant son durcissement. L'authentificateur (3) a subi préalablement une préparation de surface permettant un accrochage très fort de la résine (12) sur ses faces externes afin d'interdire tout grattage de la résine (12) qui permettrait d'accéder au dit authentificateur (3) afin de le récupérer intact. Dans ces conditions, nous percevons qu'il est extrêmement difficile voire impossible d'accéder à la vis (11) qui permet d'ouvrir le couvercle sans détérioration de l'authentificateur unique (3). Afin de simuler une non ouverture, le faussaire tentera de couler une nouvelle résine (12) avec un nouvel authentificateur (3) afin de donner une apparence de non violation, or celui-ci sera obligatoirement différent du précédent ce qui peut être contrôlé à tout moment par interrogation de la base de données.

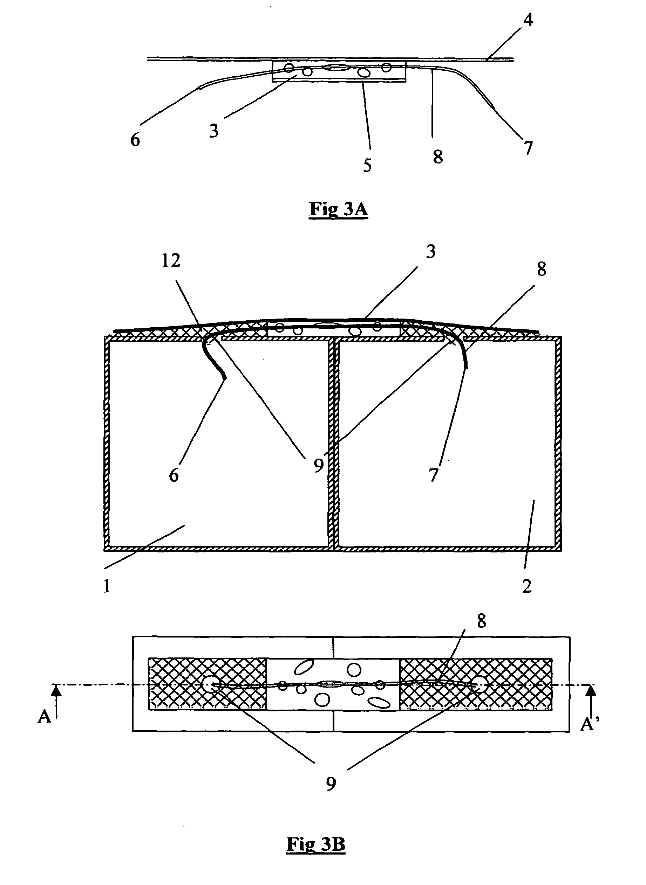

En figure 3 est représenté un autre mode de réalisation de scellé et d'intégration au système ou au lieu ou éventuellement à l'objet à protéger selon l'invention. En 3A est représenté le complexe formant le scellé dans lequel sont associés :
- Un authentificateur unique et non clonable (3) pris en sandwich entre une feuille inférieure de polyester métallisé réfléchissant (5) et une feuille supérieure transparente (4) beaucoup plus longue,
- Un fil (8) traversant l'identificateur (3) positionné et intégré lors de la fabrication du complexe formant le scellé.

Cet ensemble constitué est indissociable après réalisation, les parties étant adhérisées par tout moyen approprié. Deux trous (9) sont ménagés dans les deux éléments à réunir (1) et (2). Dans ce mode de réalisation, la méthode d'intégration au système à protéger est la suivante : un traitement d'adhérisation est préalablement effectué sur les parties des feuilles (4) et (5) qui vont venir en contact avec le système ainsi que localement sur les éléments à réunir (1) et (2); un matériau de liaison type colle à deux composants ou colle silicone transparente (12) est appliqué sur toute la surface recevant localement le scellé; le scellé est ensuite appliqué en positionnant les deux extrémités (6) et (7) du fil (8) dans les trous (9); l'ensemble est ensuite pressé. Ainsi le fil de liaison (8) constituant le lien entre l'authentificateur (3) et les éléments (1) et (2) du système à protéger est inviolable ou bien c'est au prix de sa destruction. Comme dans tous les cas précédents, soit l'intrusion ou tentative d'intrusion est visible car il y a atteinte à l'intégrité du lien ou de l'authentificateur unique, soit il n'y a rien de visible en apparence et à ce moment là il faut vérifier s'il y a correspondance entre l'authentificateur physique (3) et sa représentation dans la base de données locale ou distante.

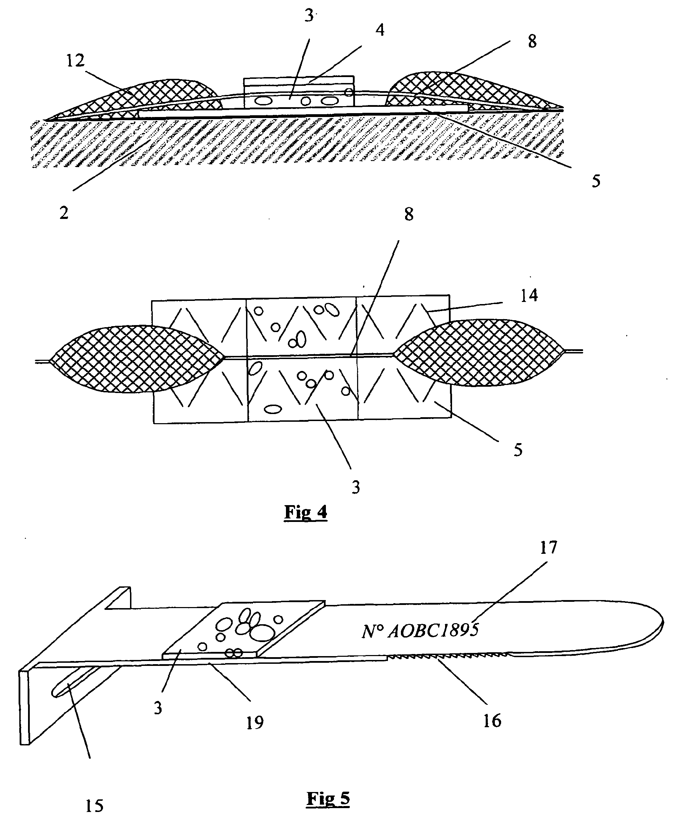

En figure 4 est représenté un autre mode de réalisation de scellé et d'intégration au système ou au lieu ou éventuellement à l'objet à protéger selon l'invention. Dans cette version l'authentificateur volumique (3), par exemple à bulles, est pris en sandwich entre une feuille supérieure transparente (4) et une feuille inférieure réfléchissante (5). Un fil (8) de longueur supérieure au scellé est intégré lors de la fabrication à l'intérieur de l'authentificateur (3). Des zones de microdécoupes (14) sont pratiquées sur la feuille inférieure (5). Ces micro découpes font intégralement partie du lien physique et participent en complément du fil traversant (8) à la fragilisation de ce lien lorsque le scellé est associé au système ou au lieu ou à l'objet à protéger. Dans sa mise en oeuvre, ce scellé est positionné par exemple par collage sur le support dont il faut protéger l'intégrité, le fil (8) est ensuite noyé dans une résine transparente. La violation du scellé pour essayer de le récupérer intégralement sans défauts visibles en vue de le repositionner est impossible car les microdécoupes (14) et le fil (8) participent conjointement à la fragilisation du scellé. Les microdécoupes (14) et le fil (8) peuvent entrer dans la composition des signatures images et/ou numériques stockées dans la base de données en complément des bulles ou des autres éléments caractérisant l'authentificateur.

En figure 5 est représenté un autre mode de réalisation de scellé et de possibilité d'intégration au système ou au lieu ou éventuellement à l'objet à protéger selon l'invention. Dans cette version l'authentificateur volumique (3), par exemple à bulles est directement intégré lors de sa fabrication sur un collier d'installation autoagrippant dont la réutilisation est impossible car il est à serrage progressif et irréversible. Ce principe de collier à denture anti-retour est largement utilisé depuis très longtemps. Dans le cas de la présente invention le support (19) est par exemple en inox réfléchissant, l'ensemble est monobloc. Un authentificateur à bulles (3) est positionné de façon indémontable par collage ou par adhérisation directe sur le support (19) du matériau utilisé lors de la génération de bulles. Lors du montage sur le système ou le lieu à protéger le collier est inséré dans des trous ménagés sur la ou les parties à réunir et à protéger puis l'extrémité dentelée (16) est ensuite insérée dans le passage (15) anti-retour. Dans ces conditions, l'authentificateur (3) et le lien physique permettant de le relier à l'objet sont indissociables sous peine de destruction. Dans cet exemple un code alpha numérique est gravé sur le collier, il constitue l'identifiant d'appel dans la base de données afin de vérifier qu'il s'agit bien du bon code à bulles et de prendre connaissance de l'objet authentique auquel il est rattaché et des renseignements associés.

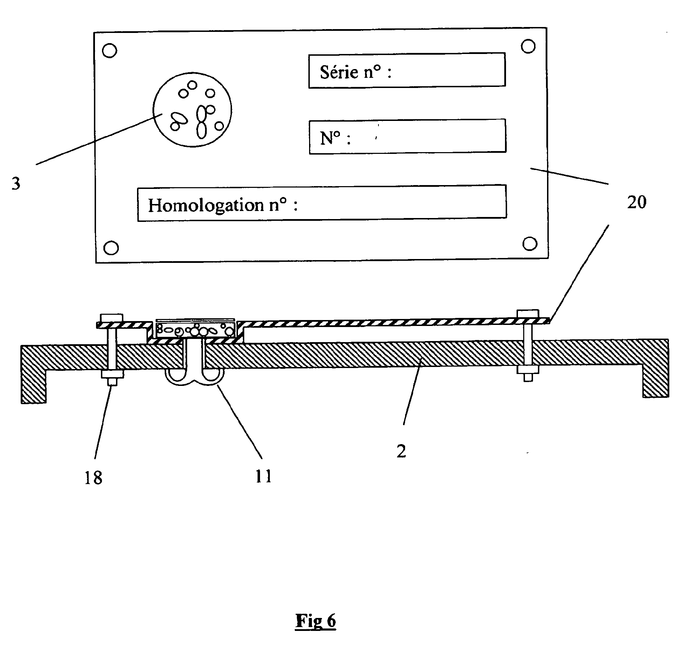

En figure 6 est représenté un autre mode de réalisation de scellé ou de plaque d'identification selon l'invention avec son intégration au système ou au lieu ou éventuellement à l'objet à protéger ou à identifier. Dans cette version l'authentificateur volumique (3), par exemple à bulles est directement intégré lors de sa fabrication sur une plaque de type signalétique métallique (5) comme il s'en trouve sur tous type d'appareils ou de machines et portant en général le numéro de série, le type, le numéro d'homologation, la date et le pays de fabrication, le nom du constructeur etc. L'authentificateur à bulles (3) est collé de façon non démontable dans un logement prévu à cet effet sur la plaque (20) qui est elle-même fixée sur le système (2) à protéger et/ou à identifier par l'intermédiaire des rivets visibles et accessibles de l'extérieur (18) et d'un rivet aveugle (11) accessible seulement de l'intérieur mais au prix de sa destruction ou même de la destruction de l'authentificateur à bulles (3) en cas de démontage. Naturellement tout autre système de rivets ou de vis aveugle rendant la fixation irréversible peut convenir. Comme dans les autres cas de figure un numéro d'accès de tout type connu peut être associé tel que numérique, alpha numérique, RFID, code barres, magnétique etc., pour accéder à la base de données et ainsi vérifier l'authenticité du scellé ou de la plaque d'identification en regard de l'objet sur lequel elle est positionnée.

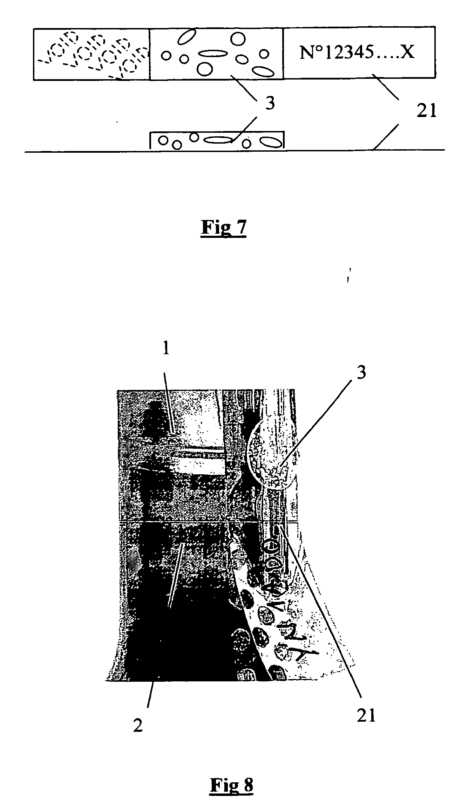

En figure 7, est représenté une autre forme de scellé de sécurité selon la présente invention se présentant sous la forme d'une étiquette adhésive, dont la base (21) est partiellement destructible à l'arrachage. Cette forme de scellé associe une base (21) adhésive appelée « VOID » ou « Temper evident » à un authentificateur à bulles (3) intégré de façon non démontable à la dite base (21). Ce type de scellé est particulièrement adapté au scellement d'emballage. En effet, il suffit pour cela d'appliquer cette étiquette à cheval sur une ouverture de l'emballage.

En figure 8, est représenté un scellé de sécurité à bulles sous forme d'étiquette du type de celui décrit en figure 7, appliqué à la capsule (1) d'une bouteille (2) afin d'authentifier non seulement le contenant mais aussi de garantir l'intégrité du contenu. Précisément dans ce cas, l'accès au contenu sera immanquablement détecté soit par l'altération de l'étiquette qui est placée à cheval sur la bouteille et la capsule, soit par le remplacement d'un nouveau scellé à bulles qui ne sera pas enregistré dans la base de données, soit par destruction de la capsule.

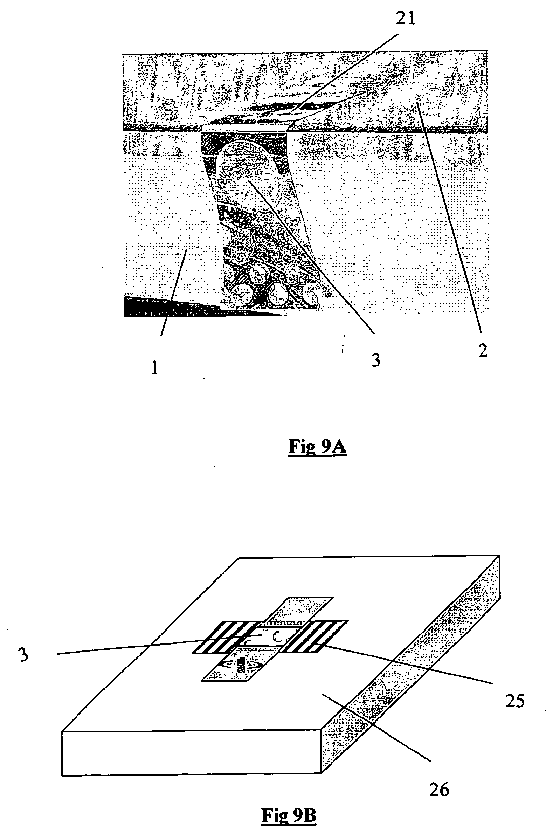

En figure 9A, est représenté un scellé de sécurité à bulles sous forme d'étiquette du type de celui décrit en figure 7, appliqué à la fermeture d'une boîte afin d'authentifier non seulement le contenant mais aussi de garantir l'intégrité du contenu. Précisément dans ce cas, l'accès au contenu sera immanquablement détecté soit par l'altération de l'étiquette qui est placée sur l'ouverture (1) de la boîte (2), soit par le remplacement d'un nouveau scellé à bulles qui ne sera pas enregistré dans la base de données.

En figure 9B, est représenté un authentificateur à bulles (3) sous forme d'étiquette du type de celui décrit en figure 7, appliqué au scellement d'un emballage primaire (25) à l'intérieur d'un emballage secondaire (26). Pour ce faire, une ouverture dans l'emballage secondaire (26) permet de placer le scellé (3) à bulles sur une étiquette adhésive destructible, à la fois sur l'emballage secondaire (26) et sur l'emballage primaire (25). Si l'ouverture de l'emballage secondaire (26) reste possible sans altérer le scellé (3) toute extraction de l'emballage primaire (25) ou de son contenu entraîne la destruction du scellé ou/et de l'emballage primaire (25).

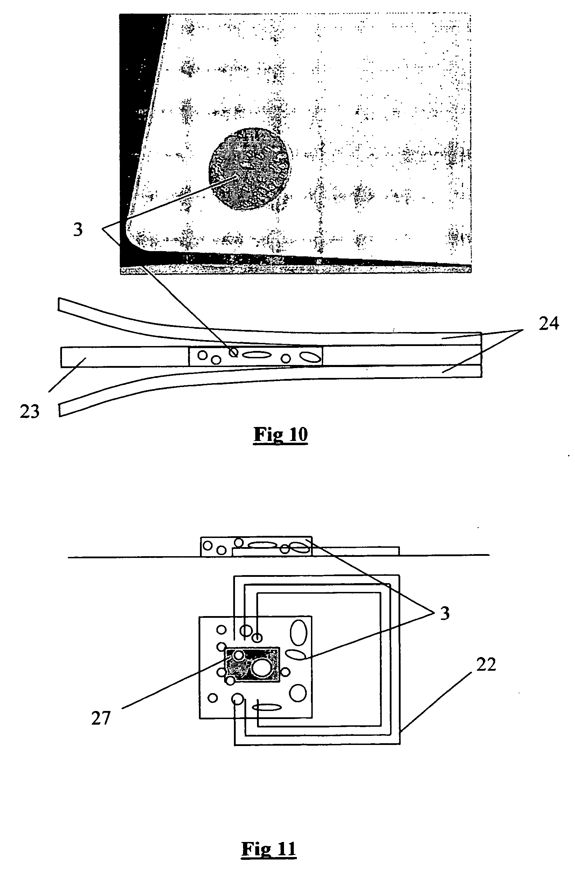

En figure 10, est représenté un authentificateur à bulles (3) constituant une clef physique publique qui est laminé dans un corps de cartes (23) lors de sa fabrication entre deux feuilles protectrices (24) formant un sandwich. Un tel support intégrant en son sein un authentificateur unique et non reproductible constitue un ensemble intrinsèquement sécurisé permettant d'accéder soit à une vérification d'attributions de droits dans une base de données, soit à des données confidentielles. Ce droit peut être de toute nature, il peut s'agir de l'accès physique à des locaux par une personne, du droit à retirer de l'argent ou d'effectuer des paiements pour une carte bancaire, de preuve d'identité et de citoyenneté pour une carte d'identité ou du droit de circulation pour un passeport. Dans le cas présent, l'authentificateur (3) peut être associé à une mémoire ou un cryptoprocesseur. Cette mémoire peut être magnétique, optique, électronique ou imprimée sous forme de code barre en une ou deux dimensions.

Dans le cas présent, les feuilles protectrices (24) constituent le lien physique associant l'authentificateur physique (3) au corps de carte (23). Il est évident que plusieurs modes de réalisation existent sans se départir de la présente invention. A titre d'exemple, il serait envisageable de réaliser un lamage dans le corps de carte (23), d'insérer l'authentificateur dans le lamage et d'appliquer une seule feuille protectrice (24) sur le corps de la carte et sur l'authentificateur pour lier physiquement l'authentificateur (3) au corps de carte (23). Ainsi l'authentificateur (3) peut être directement intégré par laminage dans un corps de carte sous une ou entre deux feuilles (24) formant un sandwich.

En figure 11, est représenté un authentificateur à bulles (3) dans lequel est partiellement inséré un RFID (22) (étiquette d'indentification radio fréquence).Dans ce cas, à titre d'exemple non limitatif, une image ou une signature logique extraite de l'authentificateur à bulles (3) est cryptée et stockée dans la mémoire du RFID (27) permettant ainsi, non seulement l'identification procurée par le RFID, mais une authentification de très haute sécurité procurée par le code à bulles (3) lors d'un contrôle « in situ ».

Selon une autre caractéristique du procédé et du scellé d'authentification, il est particulièrement inventif d'associer au moins deux authentificateurs du type code à bulles entre eux par l'intermédiaire d'au moins deux scellés qui sont chacun d'eux apposés sur au moins deux parties du système ou du lieu ou de l'objet pouvant être physiquement séparées. A titre d'exemple il est ainsi possible de lier dans une même base de données un objet ayant son propre scellé ou plaque d'identification avec sa facture d'achat comportant son propre scellé, le même numéro d'appel ou d'adresse dans la base de données permet alors de vérifier l'association de l'un et de l'autre, cette caractéristique permet entre autre de lutter contre le vol et le recel. Parmi de nombreuses applications potentielles de cette caractéristique il y a l'association d'une oeuvre d'art ou antiquité ou produit de luxe avec leur certificat d'authenticité; l'association d'un certificat d'immatriculation avec le véhicule correspondant (dans ce cas il peut y avoir une base de données partagée entre l'administration pour la délivrance de cartes grises et les constructeurs automobiles pour fournir les renseignements propre à chaque véhicule) etc.

Selon une autre caractéristique du procédé d'authentification, il peut être associé au moins deux authentificateurs du type à bulles sur un seul et même scellé apposé sur au moins deux éléments physiques, et le même identifiant d'appel permet alors de vérifier l'ensemble des authentificateurs constituant le scellé.

### APPLICATIONS

Selon la présente invention, une multitude d'applications sont possibles au niveau industriel, logistique, domestique : scellé de container ou de cargaisons avec des vérifications intermédiaires lors de passage en douane par exemple en vérifiant l'authenticité du scellé enregistré dans la base de données et simultanément accéder à des renseignements précis sur la nature et l'objet de la cargaison; scellé d'appareils de mesure ou de métrologie vérifiés par des organismes habilités ou d'Etat ; scellé d'appareils électroniques type ordinateur ou enregistreur de données du type chrono tachygraphe; scellé de tous types de compteurs (électricité, gaz, eau, tous fluides etc..); scellé pour interdire l'accès à des locaux; scellés d'urnes; scellés d'objets ou de documents de valeurs du type oeuvre d'art, certificats d'authenticité, antiquités, plaques d'immatriculation de véhicules en relation avec les cartes grises (l'un comme l'autre devenant des scellés infalsifiables), scellé de documents administratifs tels que les cartes nationales d'identité et passeport.

## Revendications

1. Procédé de vérification de non intrusion dans un système ou un lieu à
protéger (1) (2) (25) (26) ou de non atteinte à l'intégrité d'un objet (20) (23) faisant usage d'un authentificateur volumique à bulles résultat d'un processus chaotique (3) et impossible à contrôler par l'homme afin de garantir sa non interchangeabilité et dont une représentation est stockée dans une base de données **caractérisé en ce que** ledit authentificateur (3) est associé par un fil (8) s'intégrant de façon définitive et irréversible à la fois à l'authentificateur (3) et à l'élément à protéger (1) (2) de façon à ce que toute tentative d'ouverture du système ou du lieu à protéger ou d'atteinte à l'intégrité de l'objet modifie de façon visible ou détruise l'authentificateur physique unique et non reproductible (3) en le rendant inutilisable et/ou modifie de façon visible ou détruise ledit fil (8) associant ledit authentificateur physique au système ou au lieu ou à l'objet à protéger.

2. Procédé de vérification de non intrusion dans un système ou un lieu à protéger (1) (2) (25) (26) ou de non atteinte à l'intégrité d'un objet (20) (23) faisant usage d'un authentificateur volumique résultat d'un processus chaotique (3) et impossible à contrôler par l'homme afin de garantir sa non interchangeabilité et dont une représentation est stockée dans une base de données selon la revendication 1, **caractérisé en ce que** un RFID est associé et intégré physiquement dans le matériau constituant l'authentificateur pour former un scellé de haute sécurité.

3. Procédé de vérification de non intrusion dans un système ou un lieu à protéger (1) (2) (25) (26) ou de non atteinte à l'intégrité d'un objet (20) (23) faisant usage d'un authentificateur volumique résultat d'un processus chaotique (3) et impossible à contrôler par l'homme afin de garantir sa non interchangeabilité et dont une représentation est stockée dans une base de données selon la revendication 2 **caractérisé en ce que** l'image ou la signature de l'authentificateur (3) est stockée dans la mémoire d'un RFID (27) inséré dans ledit authentificateur.

4. Scellé d'authentification destiné à prouver la non violation d'un système ou d'un lieu (1) (2) (25) (26) et/ou l'identité d'un objet (20) (23) constitué d'un authentificateur volumique physique unique et non reproductible (3) et d'un lien physique qui permet de l'associer au système à protéger (1) (2) (25) (26) ou à identifier (20) (23), l'authentificateur volumique physique unique et non reproductible étant un authentificateur volumique à bulles résultat d'un processus chaotique (3) et impossible à controler par l'homme et dont une représentation est stockée dans une base de données, **caractérisé en ce que** le lien physique est un fil (8) intégré de façon définitive et irréversible à la fois dans le volume de l'authentificateur (3) et à l'élément à protéger (1) (2) et qu'une intrusion dans le système ou le lieu à protéger ou sur le scellé lui-même destiné à prouver l'identité d'un objet modifie de façon visible ou detruise soit ledit fil (8)
soit l'authentificateur (3).

5. Scellé d'authentification destiné à prouver la non violation d'un système ou d'un lieu (1) (2) (25) (26) et/ou l'identité d'un objet (20) (23) constitué d'un authentificateur volumique physique unique et non reproductible (3) dont une représentation est stockée dans une base de données et d'un lien physique qui permet de l'associer au système à protéger (1) (2) (25) (26) ou à identifier (20) (23) selon la revendication 4 **caractérisé en ce que** le fil (8) est pris en sandwich entre deux feuilles (4) et (5) dont la feuille inférieure (5) possède des micro découpes (14), l'ensemble constituant le lien physique entre ledit identificateur et le système ou le lieu ou l'objet à protéger et/ou à identifier.

6. Scellé d'authentification destiné à prouver la non violation d'un système ou d'un lieu (1) (2) (25) (26) et/ou l'identité d'un objet (20) (23) constitué d'un authentificateur volumique physique unique et non reproductible (3) dont une représentation est stockée dans une base de données et d'un lien physique qui permet de l'associer au système à protéger (1) (2) (25) (26) ou à identifier (20) (23) selon la revendication 4 ou 5 **caractérisé en ce qu'**un RFID (22) est associé et intégré physiquement dans le matériau constituant l'authentificateur à bulles pour former un scellé de haute sécurité.

7. Scellé d'authentification destiné à prouver la non violation d'un système ou d'un lieu (1) (2) (25) (26) et/ou l'identité d'un objet (20) (23) constitué d'un authentificateur volumique physique unique et non reproductible (3) dont une représentation est stockée dans une base de données et d'un lien physique qui permet de l'associer au système à protéger (1) (2) (25) (26) ou à identifier (20) (23) selon la revendication 4 **caractérisé en ce que** l'authentificateur volumique physique unique et non reproductible (3) est directement intégré sur un collier monobloc (19) à serrage progressif et irréversible.

8. Scellé d'authentification destiné à prouver la non violation d'un système ou d'un lieu (1) (2) (25) (26) et/ou l'identité d'un objet (20) (23) constitué d'un authentificateur volumique physique unique et non reproductible (3) dont une représentation est stockée dans une base de données et d'un lien physique qui permet de l'associer au système à protéger (1) (2) (25) (26) ou à identifier (20) (23) selon la revendication 4 **caractérisé en ce que** l'authentificateur volumique physique unique et non reproductible (3) est directement intégré sur une plaque signalétique (20) elle-même fixée de façon irréversible sur l'objet par un système de rivets aveugle (11).

## Claims

1. Process for verifying the non-intrusion into a system or a place to be protected (1) (2) (25) (26) or the absence of an assault on the integrity of an object (20) (23), comprising a tamper-proof bubble volume identifier (1), the result of a chaotic process (3), thereby ensuring its non-interchangeability, with a representation being stored in a database, **characterised in that** the said identifier (3) is associated by means of a wire (8) incorporated in a permanent and an irreversible manner into both the identifier (3) and the element to be protected (1) (2) in such a way that any attempt to open the system or the place to be protected or any assault on the integrity of the object has the effect of visibly modifying or destroying the unique physical and non-reproducible identifier (3) by rendering it ineffective and/or visibly modifying or destroying the said wire (8) connecting the said physical identifier to the system, the place or the object to be protected.

2. Process for verifying the non-intrusion into a system or place to be protected (1) (2) (25) (26) or the absence of an assault on the integrity of an object (20) (23), comprising a tamperproof volume identifier, the result of a chaotic process (3), thereby ensuring its non-interchangeability, with a representation being stored in a database according to Claim 1 above, **characterised in that** an RFID is associated with and physically incorporated into the material constituting the identifier in order to form a high-security seal.

3. Process for verifying the non-intrusion into a system or place to be protected (1) (2) (25) (26) or the absence of an assault on the integrity of an object (20) (23), comprising a tamperproof volume identifier, the result of a chaotic process (3), thereby ensuring its non-interchangeability, with a representation stored in a database, according to Claim 2 above, **characterised in that** the image or the signature of the identifier (3) is stored in the memory of the RFID that is inserted into the identifier.

4. Authentication seal intended to prove the non-violation of a system or a place (1) (2) (25) (26) and/or the identity of an object (20) (23), constituted by a single and non-reproducible physical volume identifier (3), comprising a single non-reproducible physical volume identifier (3) and a physical link enabling it to be associated with the system to be protected (1) (2) (25) (26) or to be identified (20) (23), whereby the tamperproof single, non-reproducible physical volume identifier is the result of a chaotic process (3),which cannot be controlled by human intervention, with a representation stored in a database, **characterised in that** the bubble volume identifier (1) comprises a physical link in the form of a wire (8), which is incorporated in a permanent and irreversible manner into both the volume identifier (3) and the element to be protected (1) (2) and that an intrusion into the system or the place to be protected or an assault onto the seal itself, which is intended to prove the identity of an object, visibly modifies or destroys the said wire or the identifier (3).

5. Authentication seal intended to prove the non-violation of a system or a place (1) (2) (25) (26) and/or the identity of an object (20) (23), constituted by a single and non-reproducible physical volume identifier (3), a representation of which is stored in a database, and a physical link enabling it to be associated with the system to be protected (1) (2) (25) (26) or identified (20) (23) according to Claim 4 above, **characterised in that** the wire (8) is sandwiched between two sheets (4) and (5), the lower of which (5) comprises micro-cuts (14), with the assembly constituting the physical link between the said identifier and the system or the place or the object to be protected and/or identified.

6. Authentication seal intended to prove the non-violation of a system or a place (1) (2) (25) (26) and/or the identity of an object (20) (23), constituted by a single and non-reproducible physical volume identifier (3), a representation of which is stored in a database, and a physical link enabling it to be associated with the system to be protected (1) (2) (25) (26) or identified (20) (23) according to Claim 4 or 5 above, **characterised in that** an RFID (22) is associated with and physically integrated into the material constituting the bubble identifier to form a high-security seal.

7. Authentication seal intended to prove the non-violation of a system or a place (1) (2) (25) (26) and/or the identity of an object (20) (23), constituted by a single and non-reproducible physical volume identifier (3), a representation of which is stored in a database, and a physical link enabling it to be associated with the system to be protected (1) (2) (25) (26) or identified (20) (23) according to claim 4 above, **characterised in that** the single and non-reproducible physical volume identifier is directly incorporated into a monobloc collar (19) that can be progressively tightened and is irreversible.

8. Authentication seal intended to prove the non-violation of a system or a place (1) (2) (25) (26) and/or the identity of an object (20) (23), constituted by a single and non-reproducible physical volume identifier (3), a representation of which is stored in a database, and a physical link enabling it to be associated with the system to be protected (1) (2) (25) (26) or to be identified (20) (23), according to claim 4 above, **characterised in that** the single and non-reproducible physical volume identifier (3) is directly integrated into a rating plate (20), which is itself irreversibly attached by a system of blind rivets (11) to the object.

## Patentansprüche

1. Verfahren zur Verifikation eines Nichteindringens in ein System oder einen zu schützenden Bereich (1) (2) (25) (26) oder einer Nichtverletzung der Integrität eines Objekts (20)(23), welches einen Volumenauthentifikator (3) mit Blasen verwendet, der aus einem Prozess hervorgeht, welcher chaotisch und unmöglich durch den Menschen zu kontrollieren ist, um seine Nichtaustauschbarkeit zu garantieren, und von welchem eine Darstellung in einer Datenbank gespeichert ist, **dadurch gekennzeichnet, dass** der Authentifikator (3) über einen Draht (8), welcher auf endgültige und irreversible Weise integriert ist, zugleich mit dem Authentifikator (3) und dem zu schützenden Element (1) (2) verbunden ist, sodass jeglicher Versuch eines Öffnens des Systems oder des zu schützenden Bereichs oder einer Verletzung der Integrität des Objekts den physikalisch eindeutigen Authentifikator und nicht reproduzierbar (3) auf sichtbare Weise modifiziert oder zerstört, indem er den Draht (8), welcher den physikalischen Authentifikator mit dem System oder dem zu schützenden Bereich oder Objekt verbindet, auf sichtbare Weise modifiziert oder zerstört.

2. Verfahren zur Verifikation eines Nichteindringens in ein System oder einen zu schützenden Bereich (1) (2) (25) (26) oder einer Nichtverletzung der Integrität eines Objekts (20) (23), welches einen Volumenauthentifikator (3) verwendet, der aus einem Prozess hervorgeht, welcher chaotisch und nicht durch den Menschen zu kontrollieren ist, um seine Nichtaustauschbarkeit zu garantieren, und von welchem eine Darstellung in einer Datenbank gespeichert ist, nach Anspruch 1, **dadurch gekennzeichnet dass**, ein RFID (27) mit dem den Authentifikator ausbildenden Material verknüpft und physikalisch integriert ist, um ein Hochsicherheitssiegel zu bilden.

3. Verfahren zur Verifikation eines Nichteindringens in ein System oder einen zu schützenden Bereich (1) (2) (25) (26) oder einer Nichtverletzung der Integrität eines Objekts (20) (23), welches einen Volumenauthentifikator (3) verwendet, der aus einem Prozess hervorgeht, welcher chaotisch und nicht durch den Menschen zu kontrollieren ist, um seine Nichtaustauschbarkeit zu garantieren, und von welchem eine Darstellung in einer Datenbank gespeichert ist, nach Anspruch 2, **dadurch gekennzeichnet, dass** das Bild oder die Signatur des Authentifikators (3) in dem Speicher eines RFID (27) gespeichert ist, welches in den Authentifikator eingesetzt ist.

4. Authentifikationssiegel, welches dazu bestimmt ist, die Nichtverletzung eines Systems oder eines Bereichs (1) (2) (25) (26) und/oder die Identität eines Objekts (20) (23) nachzuweisen, welches gebildet ist aus einem physikalisch eindeutigen und nicht reproduzierbaren Volumenauthentifikator (3) und einer physikalischen Verknüpfung, welche es ermöglicht, es mit dem zu schützendes (1) (2) (25) (26) oder zu identifizierenden (20) (23) System zu verknüpfen, wobei der physikalisch eindeutige und nicht reproduzierbare Volumenauthentifikator ein Volumenauthentifikator mit Blasen (3) ist, welcher aus einem Prozess hervorgeht, der chaotisch und nicht durch den Menschen zu kontrollieren ist, und von welchem eine Darstellung in einer Datenbank gespeichert ist, **dadurch gekennzeichnet, dass** die physikalische Verknüpfung ein Draht (8) ist, welcher auf endgültige und irreversible Weise zugleich in dem Volumen des Authentifikators (3) und dem zu schützenden Element (1) (2) integriert ist, und dass ein Eindringen in das System oder den zu schützenden Bereich oder in das zum Nachweisen der Identität eines Objekts bestimmte Siegel selbst entweder den Draht (8) oder den Authentifikator (3) auf sichtbare Weise modifiziert oder zerstört.

5. Authentifikationssiegel, welches dazu bestimmt ist, die Nichtverletzung eines Systems oder eines Bereichs (1) (2) (25) (26) und/oder die Identität eines Objekts (20) (23) nachzuweisen, welches gebildet ist aus einem physikalisch eindeutigen und nicht reproduzierbaren Volumenauthentifikator (3), von welchem eine Darstellung in einer Datenbank gespeichert ist, und aus einer physikalischen Verknüpfung, welche es ermöglicht, es mit dem zu schützenden (1) (2) (25) (26) oder zu identifizierenden (20) (23) System zu verknüpfen, nach Anspruch 4, **dadurch gekennzeichnet, dass** der Draht (8) sandwichartig zwischen zwei Folien (4) und (5) angeordnet ist, von welchen die untere Folie (5) Mikroschnitte (14) aufweist, wobei die Anordnung die physikalische Verknüpfung zwischen dem Identifikator und dem zu schützenden und/oder zu identifizierenden System, Bereich oder Objekt bildet.

6. Authentifikationssiegel, welches dazu bestimmt ist, die Nichtverletzung eines Systems oder eines Bereichs (1) (2) (25) (26) und/oder die Identität eines Objekts (20) (23) nachzuweisen, welches gebildet ist aus einem physikalisch eindeutigen und nicht reproduzierbaren Volumenauthentifikator (3), von welchem eine Darstellung in einer Datenbank gespeichert ist, und aus einer physikalischen Verknüpfung, welche es ermöglicht, es mit dem zu schützenden (1) (2) (25) (26) oder zu identifizierenden (20) (23) System zu verknüpfen, nach Anspruch 4 oder 5, **dadurch gekennzeichnet, dass** ein RFID (22) mit dem den Blasenauthentifikator bildenden Material verknüpft und integriert ist, um ein Hochsicherheitssiegel zu bilden.

7. Authentifikationssiegel, welches dazu bestimmt ist, die Nichtverletzung eines Systems oder eines Bereichs (1) (2) (25) (26) und/oder die Identität eines Objekts (20) (23) nachzuweisen, welches gebildet ist aus einem physikalisch eindeutigen und nicht reproduzierbaren Volumenauthentifikator (3), von welchem eine Darstellung in einer Datenbank gespeichert ist, und aus einer physikalischen Verknüpfung, welche es ermöglicht, es mit dem zu schützenden (1) (2) (25) (26) oder zu identifizierenden (20) (23) System zu verknüpfen, nach Anspruch 4, **dadurch gekennzeichnet, dass** der physikalisch eindeutige und nicht reproduzierbare Volumenauthentifikator (3) direkt an einem einteiligen Band (19) zum fortschreitenden und irreversiblen Festziehen integriert ist.

8. Authentifikationssiegel, welches dazu bestimmt ist, die Nichtverletzung eines Systems oder eines Bereichs (1) (2) (25) (26) und/oder die Identität eines Objekts (20) (23) nachzuweisen, welches gebildet ist aus einem physikalisch eindeutigen und nicht reproduzierbaren Volumenauthentifikator (3), von welchem eine Darstellung in einer Datenbank gespeichert ist, und aus einer physikalischen Verknüpfung, welche es ermöglicht, es mit dem zu schützenden (1) (2) (25) (26) oder zu identifizierenden (20) (23) System zu verknüpfen, nach Anspruch 4, **dadurch gekennzeichnet, dass** der physikalisch eindeutige und nicht reproduzierbare Volumenauthentifikator (3) direkt an einem Erkennungsschild (20) integriert ist, welches selbst auf irreversible Weise durch ein Blindnietensystem (11) an dem Objekt befestigt ist.
